# EUROPEAN PATENT SPECIFICATION

(11) **EP 3 804 276 B1**
(45) Date of publication and mention of the grant of the patent: **26.02.2025**
(21) Application number: 18730256.7
(22) Date of filing: 24.05.2018
(51) Int. Cl.: H04W 36/00, H04W 36/02

(54) **MIGRATION OF SERVICE**
MIGRATION VON DIENSTEN
MIGRATION DE SERVICE

(43) Date of publication of application: 14.04.2021
(73) Proprietor: Nokia Solutions and Networks Oy, 02610 Espoo (FI)
(72) Inventor: PÖYHÖNEN, Petteri, 02610 Espoo (FI); FLINCK, Hannu, 00660 Helsinki (FI)
(74) Representative: Mudge, Kevin
(86) International application number: PCT/EP2018/063655
(87) International publication number: WO 2019/223869

(56) References cited:
- EP-A1- 1 558 047
- WO-A1-2017/171506
- WO-A1-2017/171506
- US-A1- 2006 062 145
- US-A1- 2007 248 049
- US-A1- 2008 130 585
- US-A1- 2018 098 250
- US-A1- 2018 139 659
- US-A1- 2018 139 659
- NOKIA ET AL: "Handover and Cell Reselection procedures for GERAN Iu mode", 3GPP DRAFT; S2-013554, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Mexico; 20011204, 4 December 2001 (2001-12-04), XP050237101

## Description

### Field

The present application relates to a method, apparatus, system and computer program. In particular, but not exclusively, the present application relates to supplying duplicate uplink data packets to a service point to which service for a device is being migrated to.

### Background

A communication system can be seen as a facility that enables communication sessions between two or more entities such as user terminals, base stations and/or other nodes by providing carriers between the various entities involved in the communications path. A communication system can be provided, for example, by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system, at least a part of a communication session between a communication device and a station (e.g. a base station or a wireless access point) occurs over a wireless link. Examples of wireless systems comprise public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. Standardization of 5G or New Radio networks is currently under discussion. LTE is being standardized by the 3rd Generation Partnership Project (3GPP).

US2018/0098250A1 describes techniques to provide ultra reliable low latency connection support in radio access networks.

"Handover and Cell Reselection procedures for GERAN Iu mode", 3GPP Draft; S2-013554, XP050237101 relates to a download packet duplication procedure.

EP1558047A1 relates to a Mobile Agent, AM, capable of controlling duplication of DL packets from a first and a second access routers, AR1, AR2, to a mobile node, MN.

### Summary

According to a first aspect, there is provided a network apparatus comprising means for: receiving at least one uplink data packet from a communication apparatus; duplicating said at least one uplink data packet; and transmitting during a migration of a service for said communication apparatus between a first service point to a second service point: said at least one uplink data packet to said first service point; and said at least one uplink data packet to said second service point.

In some aspects, the network apparatus comprises means for: receiving at least one downlink data packet from the first service point; receiving at least one downlink data packet from the second service point; forwarding the at least one downlink data packet from the first service point to the communication apparatus; and dropping the at least one downlink data packet from the second service point.

In some aspects, the network apparatus comprises means for: in response to receipt of an instruction from another network apparatus, performing said dropping.

In some aspects, the network apparatus comprises means for: in response to receipt of the instruction, applying a first rule for causing the dropping.

In some aspects, the network apparatus comprises means for, in response to receipt of a further instruction from said another network apparatus, revoking said first rule.

In some aspects, the network apparatus comprises means for: in response to receiving an instruction, following completion of said migration: dropping one or more subsequently received downlink data packets from the first service point; and forwarding one or more subsequently received downlink data packets from the second service point to the communication apparatus.

In some aspects, the network apparatus comprises means for, in response to receipt of an instruction from another network apparatus, performing said duplicating and transmitting steps.

In some aspects, the network apparatus comprises means for, in response to receipt of the instruction, applying a second rule for causing the duplicating.

In some aspects, the network apparatus comprises means for, in response to receipt of a further instruction from said another network apparatus, revoking said second rule.

In some aspects, the first service point is provided by a first edge computing node and the second service point is provided by a second edge computing node.

According to a second aspect, there is provided an apparatus comprising means for transmitting an instruction to a first network apparatus for instructing the first network apparatus to: duplicate at least one uplink data packet received from a communication apparatus; transmit during migration of service for said communication apparatus between a first service point to a second service point: said at least one uplink data packet to said first service point; and said at least one uplink data packet to said second service point.

In some aspects, the apparatus comprises means for: determining a closest common point to the second service point in a first user plane route from the communication apparatus to the first service point and a second user plane route from the communication apparatus to the second service point; and selecting the first network point in dependence upon the closest common point.

In some aspects, the apparatus comprises means for transmitting an instruction to a second network apparatus to: receive at least one downlink data packet from the first service point; and receive at least one downlink data packet from the second service point; forward the at least one downlink data packet received from the first service point to the communication apparatus; and drop the at least one downlink data packet received from the second service point.

In some aspects, the first network apparatus and the second network apparatus are the same.

In some aspects, the apparatus comprises means for determining a closest common point to the second service point in a first downlink route from the first service point to the communication apparatus and a second downlink route from the second service point to the communication apparatus; and selecting the second network apparatus in dependence upon the closest common point.

According to a third aspect, there is provided an apparatus comprising means for: receiving at a second service point provided by the apparatus from a first service point, service context associated with a connection to the communication apparatus for synchronising the service context between the first service point and the second service point; receiving during synchronisation of the service context, at the second service point, at least one uplink data packet transmitted by the communication apparatus to the first service point; updating the service context at the second service point in dependence upon the received duplicate of at least one uplink data packet; and providing service to the communication apparatus using the updated service context.

In some aspects, updating the service context comprises updating an application state associated with the connection.

In some aspects, the service context comprises a transport state and an application state.

In some aspects, updating the service context comprises updating the application state.

In some aspects, the receiving the service context comprises: receiving at the second service point provided by the apparatus from the first service point, the transport state for synchronising the transport state between the first service point and the second service point; and subsequently, receiving at the second service point provided by the apparatus from the first service point, the application state for synchronising the application state between the first service point and the second service point.

In some aspects, the first service point is provided by a first edge computing node and the second service point is provided by a second edge computing node.

According to a fourth aspect, there is provided a computer readable medium comprising program instructions for causing an apparatus to perform at least the following: receiving at least one uplink data packet from a communication apparatus; duplicating said at least one uplink data packet; and transmiting during a migration of a service for said communication apparatus between a first service point to a second service point: said at least one uplink data packet to said first service point; and said at least one uplink data packet to said second service point.

According to a fifth aspect, there is provided a computer readable medium comprising program instructions for causing an apparatus to perform at least the following: transmitting an instruction to a first network apparatus for instructing the first network apparatus to: duplicate at least one uplink data packet received from a communication apparatus; transmit during migration of service for said communication apparatus between a first service point to a second service point: said at least one uplink data packet to said first service point; and said at least one uplink data packet to said second service point.

According to a sixth aspect, there is provided a computer readable medium comprising program instructions for causing an apparatus to perform at least the following: receiving at a second service point provided by the apparatus from a first service point, service context associated with a connection to the communication apparatus for synchronising the service context between the first service point and the second service point; receiving during synchronisation of the service context, at the second service point, at least one uplink data packet transmitted by the communication apparatus to the first service point; updating the service context at the second service point in dependence upon the received duplicate of at least one uplink data packet; and providing service to the communication apparatus using the updated service context.

According to a seventh aspect, there is provided a method comprising: receiving at least one uplink data packet from a communication apparatus; duplicating said at least one uplink data packet; and transmitting during a migration of a service for said communication apparatus between a first service point to a second service point: said at least one uplink data packet to said first service point; and said at least one uplink data packet to said second service point.

According to an eighth aspect, there is provided a method comprising: transmitting an instruction to a first network apparatus for instructing the first network apparatus to: duplicate at least one uplink data packet received from a communication apparatus; transmit during migration of service for said communication apparatus between a first service point to a second service point: said at least one uplink data packet to said first service point; and said at least one uplink data packet to said second service point.

According to a ninth aspect, there is provided a method comprising: receiving at a second service point provided by the apparatus from a first service point, service context associated with a connection to the communication apparatus for synchronising the service context between the first service point and the second service point; receiving during synchronisation of the service context, at the second service point, at least one uplink data packet transmitted by the communication apparatus to the first service point; updating the service context at the second service point in dependence upon the received duplicate of at least one uplink data packet; and providing service to the communication apparatus using the updated service context.

According to a tenth aspect, an apparatus comprising: at least one processor; and at least one memory including computer program code; the at least one memory and the computer program code configured to, with the at least one processor, cause the apparatus at least to perform: receiving at least one uplink data packet from a communication apparatus; duplicating said at least one uplink data packet; and transmitting during a migration of a service for said communication apparatus between a first service point to a second service point: said at least one uplink data packet to said first service point; and said at least one uplink data packet to said second service point.

In some aspects, the at least one memory and the computer program code are configured to, with the at least one processor, cause the apparatus at least to perform: receiving at least one downlink data packet from the first service point; receiving at least one downlink data packet from the second service point; forwarding the at least one downlink data packet from the first service point to the communication apparatus; and dropping the at least one downlink data packet from the second service point.

In some aspects, the at least one memory and the computer program code are configured to, with the at least one processor, cause the apparatus at least to, in response to receipt of an instruction from another network apparatus, perform said dropping.

In some aspects, the at least one memory and the computer program code are configured to, with the at least one processor, cause the apparatus at least to, in response to receipt of the instruction, apply a first rule for causing the dropping.

In some aspects, the at least one memory and the computer program code are configured to, with the at least one processor, cause the apparatus at least to, in response to receipt of a further instruction from said another network apparatus, revoke said first rule.

In some aspects, the at least one memory and the computer program code are configured to, with the at least one processor, cause the apparatus at least to perform, in response to receiving an instruction, following completion of said migration: dropping one or more subsequently received downlink data packets from the first service point; and forwarding one or more subsequently received downlink data packets from the second service point to the communication apparatus.

In some aspects, the at least one memory and the computer program code are configured to, with the at least one processor, cause the apparatus at least to, in response to receipt of an instruction from another network apparatus, perform said duplicating and transmitting steps.

In some aspects, the at least one memory and the computer program code configured to, with the at least one processor, cause the apparatus at least to, in response to receipt of the instruction, apply a second rule for causing the duplicating.

In some aspects, the at least one memory and the computer program code are configured to, with the at least one processor, cause the apparatus at least to, in response to receipt of a further instruction from said another network apparatus, revoke said second rule.

In some aspects, the first service point is provided by a first edge computing node and the second service point is provided by a second edge computing node.

According to an eleventh aspect, there is provided an apparatus comprising: at least one processor; and at least one memory including computer program code; the at least one memory and the computer program code configured to, with the at least one processor, cause the apparatus at least to transmit an instruction to a first network apparatus for instructing the first network apparatus to: duplicate at least one uplink data packet received from a communication apparatus; transmit during migration of service for said communication apparatus between a first service point to a second service point: said at least one uplink data packet to said first service point; and said at least one uplink data packet to said second service point.

In some aspects, the at least one memory and the computer program code are configured to, with the at least one processor, cause the apparatus at least to perform: determining a closest common point to the second service point in a first user plane route from the communication apparatus to the first service point and a second user plane route from the communication apparatus to the second service point; and selecting the first network point in dependence upon the closest common point.

In some aspects, the at least one memory and the computer program code are configured to, with the at least one processor, cause the apparatus at least to transmit an instruction to a second network apparatus to: receive at least one downlink data packet from the first service point; and receive at least one downlink data packet from the second service point; forward the at least one downlink data packet received from the first service point to the communication apparatus; and drop the at least one downlink data packet received from the second service point.

In some aspects, the first network apparatus and the second network apparatus are the same.

In some aspects, the at least one memory and the computer program code are configured to, with the at least one processor, cause the apparatus at least to transmit an instruction to the second network apparatus to: determining a closest common point to the second service point in a first downlink route from the first service point to the communication apparatus and a second downlink route from the second service point to the communication apparatus; and selecting the second network apparatus in dependence upon the closest common point.

According to a twelfth aspect, there is provided an apparatus comprising: at least one processor; and at least one memory including computer program code; the at least one memory and the computer program code configured to, with the at least one processor, cause the apparatus at least to perform: receiving at a second service point provided by the apparatus from a first service point, service context associated with a connection to the communication apparatus for synchronising the service context between the first service point and the second service point; receiving during synchronisation of the service context, at the second service point, at least one uplink data packet transmitted by the communication apparatus to the first service point; updating the service context at the second service point in dependence upon the received duplicate of at least one uplink data packet; and providing service to the communication apparatus using the updated service context.

In some aspects, updating the service context comprises updating an application state associated with the connection.

In some aspects, the service context comprises a transport state and an application state.

In some aspects, the updating the service context comprises updating the application state.

In some aspects, the receiving the service context comprises: receiving at the second service point provided by the apparatus from the first service point, the transport state for synchronising the transport state between the first service point and the second service point; and subsequently, receiving at the second service point provided by the apparatus from the first service point, the application state for synchronising the application state between the first service point and the second service point.

In some aspects, the first service point is provided by a first edge computing node and the second service point is provided by a second edge computing node.

In the above, many different examples have been described. It should be appreciated that further examples may be provided by the combination of any two or more of the examples described above.

### Description of Figures

Some examples will now be described with reference to the accompanying Figures in which:
Figure 1 shows a schematic diagram of an example communication system comprising a plurality of base stations and a plurality of communication devices;
Figure 2 shows a schematic diagram of an example mobile communication device;
Figure 3 shows a schematic diagram of an example control apparatus;
Figure 4 illustrates an example of a non-transitory computer readable medium;
Figure 5 illustrates an example of communication system including a cloud data centre;
Figure 6 illustrates an example scheme for performing migration of service;
Figure 7 illustrates an example of an active session provided to a communication device by a service point;
Figure 8 illustrates an example communication system including logic to initiate migration of service;
Figure 9 illustrates an example communication system in which transport state is copied from a first service point to a second service point;
Figure 10 illustrates an example communication system in which application state is synchronised between a first service point and a second service point;
Figure 11 illustrates an example communication system in which the service has been migrated from a first service point to a second service point;
Figure 12a illustrates the first half of an example message sequence diagram showing the process of service migration between a first service point and a second service point;
Figure 12b illustrates the second half of the example message sequence diagram showing the process of service migration between the first service point and the second service point;
Figure 12c illustrates an alternative scheme for some of the steps shown in Figure 12b;
Figure 13 illustrates a method that may be performed by a Service Migration Monitoring Point;
Figure 14 illustrates a method that may be performed by a network element; and
Figure 15 illustrates a method that may be performed by a second service point.

### Detailed description

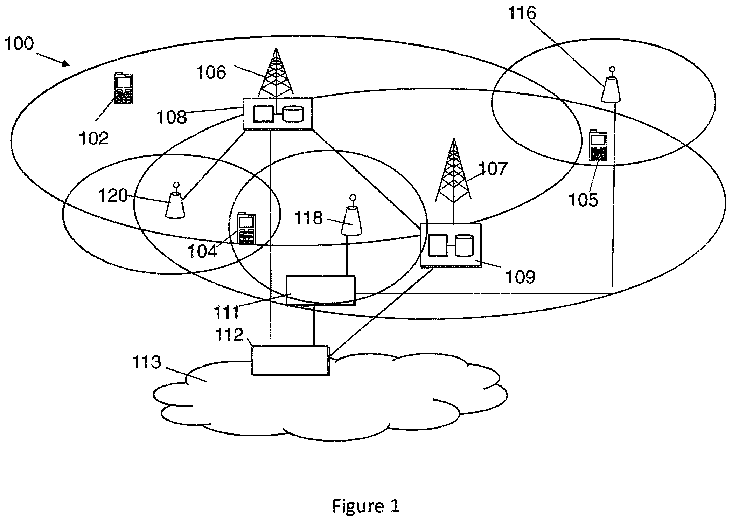

Before explaining in detail the examples, certain general principles of a wireless communication system and mobile communication devices are briefly explained with reference to Figures 1 to 2 to assist in understanding the technology underlying the described examples.

In a wireless communication system 100, such as that shown in Figure 1, mobile communication devices or user equipment (UE) 102, 104, 105 are provided wireless access via at least one base station or similar wireless transmitting and/or receiving node or point. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatus. The controller apparatus may be part of the base station and/or provided by a separate entity such as a Radio Network Controller. In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

In Figure 1, base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some aspects, the smaller stations may not be provided. Smaller base stations 116, 118 and 120 may be part of a second network, for example WLAN and may be WLAN APs.

An example of wireless communication systems are architectures standardized by the 3rd Generation Partnership Project (3GPP). A 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE employs a mobile architecture known as the Evolved Universal Terrestrial Radio Access Network (E-UTRAN). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as wireless local area network (WLAN) and/or WiMax (Worldwide Interoperability for Microwave Access). A base station can provide coverage for an entire cell or similar radio service area.

An example of a suitable communications system is the 5G or NR concept. Network architecture in NR may be similar to that of LTE-advanced. Base stations of NR systems may be known as next generation Node Bs (gNBs). Changes to the network architecture may depend on the need to support various radio technologies and finer QoS support, and some on-demand requirements for e.g. QoS levels to support QoE of user point of view. Also network aware services and applications, and service and application aware networks may bring changes to the architecture. Those are related to Information Centric Network (ICN) and User-Centric Content Delivery Network (UC-CDN) approaches. NR may use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications, this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

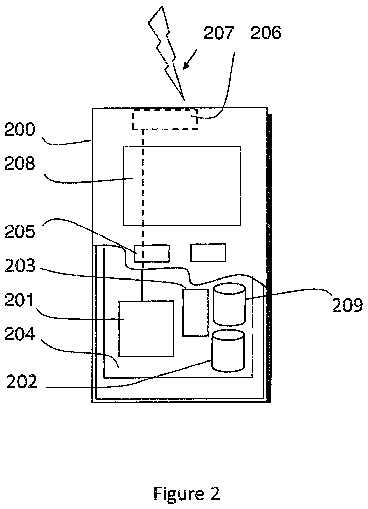

A possible mobile communication device will now be described in more detail with reference to Figure 2 showing a schematic, partially sectioned view of a communication device 200. Such a communication device is often referred to as a user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

The mobile device 200 may receive signals over an air or radio interface 207 via appropriate apparatus for receiving and may transmit signals via appropriate apparatus for transmitting radio signals. In Figure 2, transceiver apparatus is designated schematically by block 206. The transceiver apparatus 206 may be provided, for example, by means of a radio part and associated antenna arrangement. The antenna arrangement may be arranged internally or externally to the mobile device.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

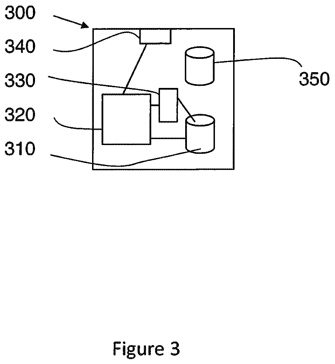

Figure 3 shows an example of a control apparatus for a communication system, for example to be coupled to and/or for controlling a station of an access system, such as a RAN node, e.g. a base station, (e) node B or 5G AP, or a node of a core network such as an MME or S-GW, or a server or host. The method may be implemented in a single control apparatus or across more than one control apparatus. The control apparatus may be integrated with or external to a node or module of a core network or RAN. In some aspects, base stations comprise a separate control apparatus unit or module. In other aspects, the control apparatus can be another network element such as a radio network controller or a spectrum controller. In some aspects, each base station may have such a control apparatus as well as a control apparatus being provided in a radio network controller. The control apparatus 300 can be arranged to provide control on communications in the service area of the system. The control apparatus 300 comprises at least one random access memory 310, at least one read only memory 350 at least one data processing unit 320, 330 and an input/output interface 340. Via the interface, the control apparatus can be coupled to a receiver and a transmitter of the base station. The receiver and/or the transmitter may be implemented as a radio front end or a remote radio head.

Cloud computing was developed to allow access at user devices to shared pools of system resources over the internet. However, as networks become more sophisticated and, particularly as consumers and companies embrace internet of things (IoT), additional demands will be placed on the network architecture. For example, transmitting large amounts of data over the internet to a cloud data centre for processing may result in a large amount of backhaul traffic. To reduce these demands on the architecture, as well as to reduce latency, edge computing has been developed. In this case, data is transferred to a local network apparatus that includes compute capabilities, storage capabilities, and network connectivity. The data is processed at the edge of the network, although at least some of the data may be sent to the central processing or storage repository in a cloud data centre.

One form of edge computing is known as Multi-access Edge computing (MEC). Large public venues and enterprise organisations are excellent beneficiaries of MEC. In large-scale situations where localized venue services are important, content is delivered to onsite consumers from a MEC server located at the venue. At least some of the content is locally stored, processed, and delivered, without the need to transport this content to a centralized core network. Large enterprises are also increasingly motivated to process data locally rather than by sending large amounts of backhaul traffic to a central network.

One problem that has arisen is how to relocate an application instance that is provided by the network from one host to another host without loss of service continuity to a user. The relocation of the application instance may refer to re-instantiating an application instance at another host/service point. This may be performed if, for example, the instance of the application is not available at one host, but is available at another host. It may also be performed, if the same application is available at one host, but cannot serve a new user. Such re-instantiation of an application may be referred to as "service migration".

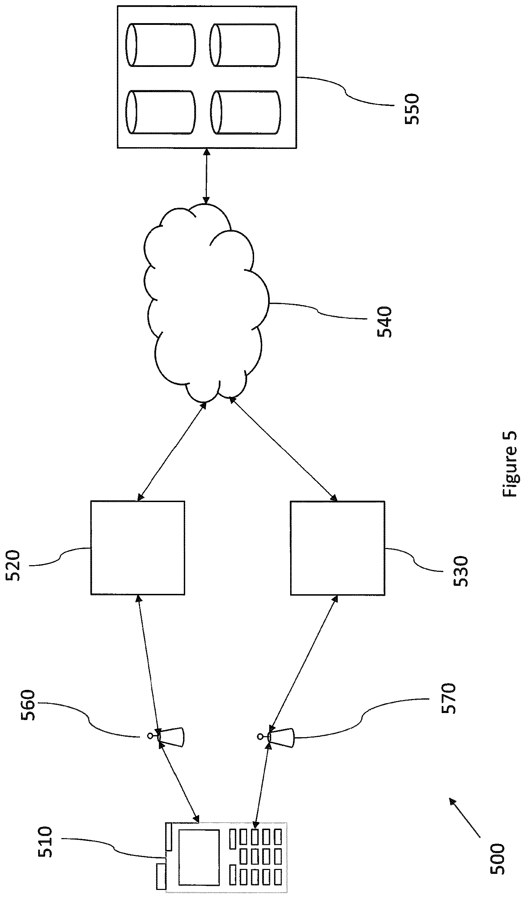

Reference is made to Figure 5, which illustrates a communication system 500 that includes a device 510. The device 510 may be configured to communicate with a first service point 520 and a second service point 530. Each service point may be an edge device. Examples of edge devices include routers, routing switches, integrated access devices, multiplexers and other WAN device. The storage and compute functions that may be provided by the service points may be co-located with cell-sites, local cell aggregation points or micro/pico cells. The service points may be data centers. The service points may be servers. The service points may be provided by entry points to the core network. In some examples, the first and second service points may also be referred to as first and second service instances, respectively, or first and second service nodes, respectively.

There may be one or more intermediary pieces of equipment via which the device 510 is configured to communicate with the service points 520, 530. As shown in Figure 5, there may be provided a wireless access point 560 via which the device 510 is configured to send and receive data with the service point 520. There may be provided a wireless access point 570 via which the device 510 is configured to send and receive data with the service point 530. In addition to the access points 560, 570, this data may be routed to the service points 520, 530 via network equipment such as switches and routers.

As shown in Figure 5, the service points 520, 530 are configured to send and receive data to a cloud datacentre 550 via the network 540. The network 540 could the internet. Network 540 could be a public/shared network. Network 540 could be a non-public transit network. The non-public transit network could provide services defined by a Service-level agreement. The network 540 may be a virtual private network on top of the internet. The service points 520, 530, may transfer all of the data packets received on the uplink from the device 510 to the cloud data centre 550. Alternatively, only some of the data received at the service points 520, 530 may be transferred to the cloud data centre 550. The service points 520, 530 are configured to provide storage and compute functions for data received from the device 510. The service points 520, 530 may process data packets that are sent on the downlink to the device 510.

Each of the service points 520, 530 may be configured to run applications that process data received from the device 510 on the uplink and to provide data packets to be sent to the device 510 on the downlink.

It may be useful in such a system where one of the service points 520, 530 provides an application for the device to provide for application mobility. Application mobility involves the relocation of user context and/or application instance from one service point to another, or between one service point and the cloud datacentre 550. Such application mobility may be useful, for example, in the case of a MEC host attached to mobile operators' networks.

As the device 510 moves around within the network, the device 510 may switch from being connected to the first service point 520 to being connected to the second service point 530. This may happen, for example, if the device 510 moves closer to the second wireless access point 570 and further from the first wireless access point 560, resulting in a better quality connection to the second service point 530 than to the first service point 520. The switching may occur in response to the network determining that a better quality connection can be offered to device 510 by the second service point 530 than by the first service point. In this case, the service quality may be improved by relocating the application instance and/or user context associated with the device 510 to the second service point 530 so as to continue to offer the best service performance. In some cases, the switching may occur in response to load balancing/management in the network side. The network may determine that an on-going session for a device is to be migrated from the first wireless access point 560 to the second wireless access point 570 so as to reduce the load on the first service point 520 associated with the first wireless access point 560. The load may be reduced on the first service point 520 for the purposes of temporarily disabling the first service point 520 for maintenance purposes.

When migrating the application from the first service point 520 to the second service point 530, it is desirable to do so whilst guaranteeing service continuity. It is also desirable to meet the requirements of high availability, low latency and scalability, when migrating/relocating between service points. Furthermore, when migrating stateful services seamlessly, the service level context (i.e. the application state and the transport state) for the service being provided to the device should be preserved.

In examples of the application, the service that is migrated may be a stateful service. In a stateful service, the response formed in response to a request (e.g. a HTTP GET request) from a communication device may be dependent on the state maintained by the server without having any dependence upon state maintained by the communication device. In contrast, in a stateless service, all the necessary state information needed to respond to the client's request is contained in the request itself. In this case, the client needs to maintain the state and the server is not storing any application state for the client.

In some example, the service mobility is visible to the device 510, i.e. the device 510 and the network 540 agree on what changes are to be done in the transport level. In other words, a new E2E (end to end) transport is created to carry an E2E application session. Therefore, the E2E application session remains, but when migrating the application session from the first service point 520 to the second service point 530, the underlying transport carrying is switched.

Service migration may be particularly relevant for edge cloud based applications (i.e. MEC host), but also for other set ups where a service needs to be migrated from one computing node to another. Service migration may be needed for scheduled maintenance, failure recovery and scaling service, particularly for edge resident services.

Triggers for service migration may include one or more of: optimisation of the usage of network resources; user mobility; planned maintenance; and the introduction of new resources to the network.

One problem that may arise during the migration of service from one service point to another, is how to ensure that the service context (including application and transport state) is synchronised between the original and the new target service points. That is, how to ensure that the service context held by the new service point is the same as that held by the original service point. By doing so, the service migration can be made transparent and seamless to the UE. Aspects of the application may solve this problem.

Some of the existing proposals for service migration require close migration between the original service point and the new target instance to which the active service session is to be migrated. This may makes service migration application/service specific, hard to implement and may lead to a loopback delay between the old and new service points. It is desirable to have a service migration scheme that needs to be designed to be highly available. It is also desirable for a service to contain the supporting service migration logic to ensure that the two contexts are in sync.

Examples of the application provide a method and apparatus that enable the migration of an active service together with its context (including application and transport state) from a first service point to a second service point in a seamless manner. The first service point and second service point may be provided by a single data centre. The first service point and second service point may be provided by a distributed data centre. The first service point and second service point may be cloud instances.

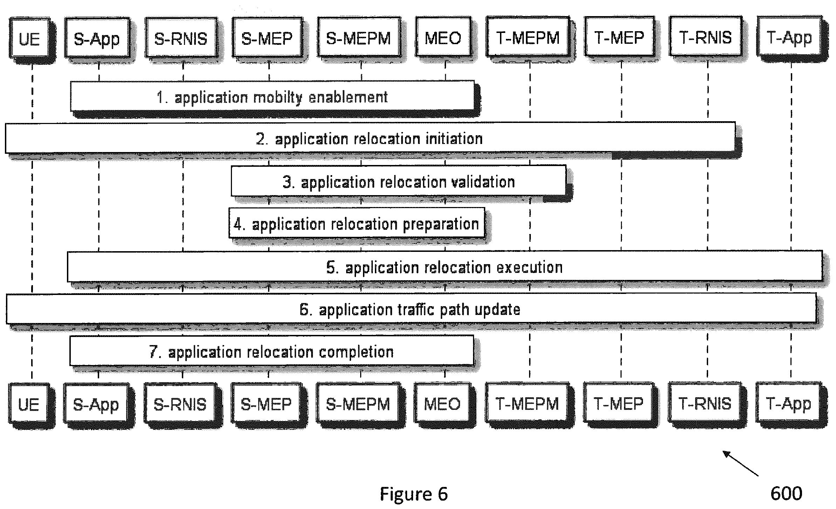

In Figure 6, the transport and application states are shown as separate entities since, according to examples of the application, the transport and application states are moved and synchronised separately.

Reference is made to Figure 6, which illustrates an overview of an example scheme 600 that may be used to perform the migration of service between the first service point and the second service point. The scheme comprises a series of 7 stages. The first stage comprises enablement of application mobility. The second stage comprises the initiation of application relocation. The third stage comprises validation of application relocation. The fourth stage comprises preparation of application relocation. The fifth stage comprises execution of application relocation. The sixth stage comprises updating of the application traffic path. The seventh stage involves completion of application relocation.

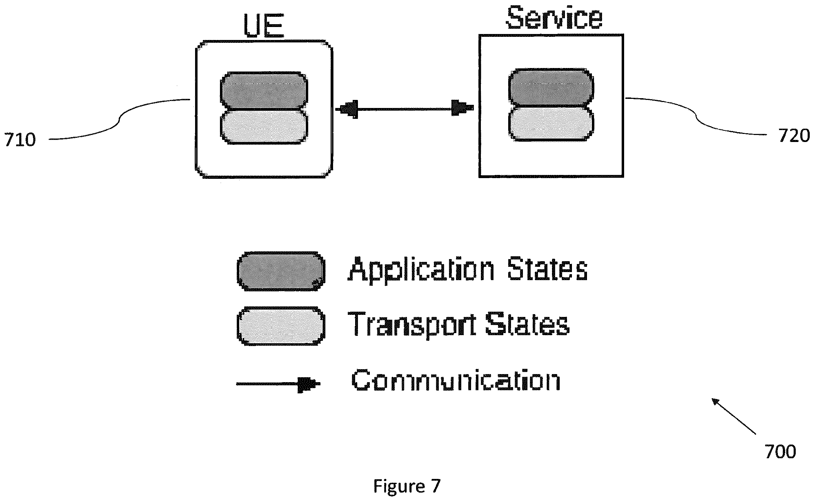

Aspects of the application provide a method and apparatus that enable a live service migration to be performed seamlessly without a client device's ongoing service being interrupted. Reference is made to Figure 7, which shows an example of a device 710 in communication with a service point 720 prior to the start of a migration phase. The device 710 is engaged in an active session with the service point 720. As shown, the service context includes application states and transport states. The application states may be device specific application state. The application state may be understood to be the memory state of an application that is using the transport layer. The transport states may be related to the device specific application states. The Service context may additionally include service image and libraries that operate on the application and transport states. The application state may contain at least one of application specific data state, images and libraries. Transport state may contain lower level (e.g. levels 2 - 4 of the OSI model) protocols state. The transport state may include cryptographic information if a secure transport protocol like Transport Layer Security (TLS) is used. This cryptographic part of the transport state is typically static for the duration of the session unless re-keying is done for the session. In other words, the cryptographic information is independent of the amount of data transported over the network and the timing of this transmission. This lower level protocol stack may be accessible to network devices, such as middleboxes (open Flow), switches, and routers that forward packets, but do not handle the payload.

In order to provide seamless migration, examples of the application may provide a network apparatus in the communication system that is configured to duplicate packets in the uplink from a communication device and transmit the duplicate packets to the first service point (the origin service point) and the second service point (the target service point). This network apparatus may be a service migration monitoring point (SMMP). Throughout the description, the network apparatus is referred to as an SMMP. However, it would be appreciated by the skilled person that the SMMP is not limited by this name, but the SMMP may be any network apparatus that performs the functions described.

The SMMP may be configured to receive downlink data packets from both the first service point and the second service point. However, the SMMP may be configured to delete the downlink data packets that are received from the second service point (the target service point) such that these downlink data packets are not received at the device. In other words, the SMMP may be configured to prevent the downlink data packets received from the second service point from being received at the device. The SMMP may, on the other hand, forward the downlink data packets received from the first service point to the device such that these downlink data packets are received at the device.

The second service point is configured to receive service context from the first service point so as to synchronise the service context between the first service point and the second service point. The second service point may also receive the duplicate uplink data packets from the SMMP as discussed above. The second service point is configured to update its stored service context in dependence upon the received uplink data packets. By doing so, when the service for the device is handed from the first service point to the second service point, the service context held by the second service point should be fully up to date such that the service can be migrated seamlessly.

Examples of the application may comprise the following steps in chronological order: the triggering of the migration; the preparation and creation of new context; the moving of the transport state (and additional information) from the first service point to the second service point in a secure manner; the selection of the SMMP for performing the copying of uplink data packets and the dropping of downlink data packets; the synchronisation of the transport state; transferring the application state from the first service point to the second service point; synchronisation of the application state between the first service point and the second service point; removal to the SMMP; switching for the device from communication with the first service point to the communication second service point (this step may also include modification of the packet rules of the SMMP); and ending the service provided by the first service point provided by the device and removing the SMMP.

By dropping the downlink data packet, it may be understood that the data packet is prevented from reaching the device by the SMMP. The SMMP may achieve this by deleting the data packet.

Examples of the application will now be described in more detail with reference to the Figures.

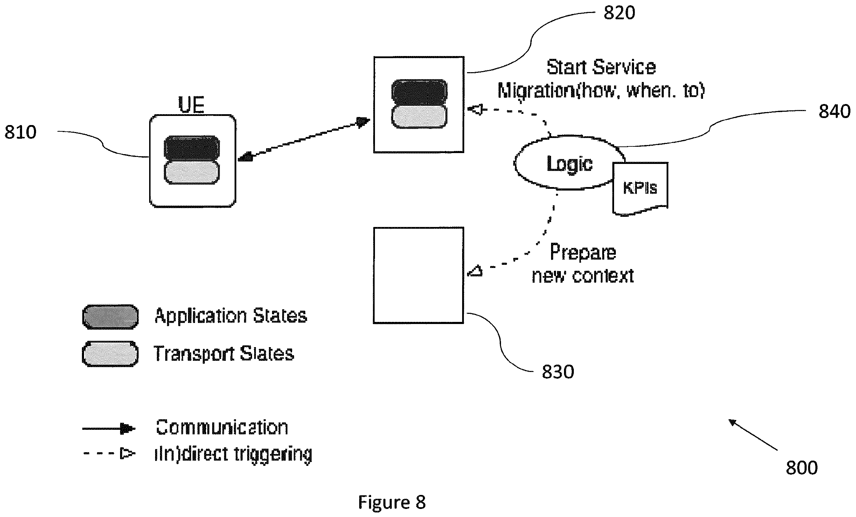

Reference is made to Figure 8, which shows an example of a communication system 800 in which service migration is initiated. The communication system 800 includes a device 810 in communication with a first service point 820. Prior to the migration, the first service point 820 provides an active session for the device 810. The first service point 820 contains up to date application and transport states for the active session. The communication system 800 additionally includes a second service point 830 to which the service for the active session will be migrated.

The communication device 810 may also be a communication apparatus 810.

The communication system 800 may additionally include logic 840. The logic 840 is configured to determine that the service is to be migrated. In response to determining that the service is to be migrated, the logic 840 is configured to provide an indication that the service is to be migrated to the first service point 820. The indication that the service is to be migrated may comprise an indication of the second service 830 to which the service is to be migrated. The indication may comprise an indication of how the migration should be performed. The indication may comprise an indication of when the migration should be performed. The logic 840 may be located at a service provision system and/or a network management system.

The logic 840 may determine that the service is to be migrated as part of planned maintenance. The planned maintenance may involve the addition or removal of network resources that provide the first and/or second service points. Therefore, the logic 840 may determine that the service is to be migrated based on the addition of resources providing the second service point 830 to the communication system 800. The logic 840 may determine that the service is to be migrated based on the removal of resources providing the first service point 820 from the communication system 800. The logic 840 may determine that the service is to be migrated in response to determining that the device 810 has entered a new service area (e.g. the service area of the second service point 830). The logic 840 may determine that the service is to be migrated based on the relative load between the first service point 820 and the second service point 830. The logic 840 may determine that the service is to be migrated based on the availability of the first service point 820 and/or the second service point 830.

The logic 840 may store or have access to one or more performance indicators of the service that is provided by the first service point 820 and the second service point 830. The one or more performance indicators may be KPIs (Key performance indicators). The logic 840 may determine that the service is to be migrated in dependence upon the one or more performance indicators. The performance indicators may be received at the logic 840. The performance indicators received at the logic 840 may be received from one or more network entities. The performance indicators may include information derived from real-time analytics.

The logic 840 may determine that the service is to be migrated in response to determining that the logic 840 has one or more of: a predetermined number of performance indicators; a predetermined number of policies; and a service level agreement (SLA).

The logic 840 may transmit an instruction configured to cause the creation of new context at the second service point 830. When the second service point 830 has stored the new context, the first service point 820 and the second service point 830 may communicate with each other so as to transfer the specific service context for the session with the device 810 from the first service point 820 to the second service point 830. The logic 840 may transmit to the second service point 830, the necessary parameters for context creation. The logic 840 may transmit to the first service point 820, the necessary parameters for context creation. The logic 840 may transmit to the first service point 820 and/or the second service point 830 information to secure the context transfer. This information may comprise security credentials to access and transfer the context.

In some examples the logic 840 may indirectly invoke the creation of the new context at the second service point 830. In this case, an orchestration system (not shown) may send an instruction to cause the instantiation of new context. The orchestration system may be a virtual infrastructure manager (VIM). The orchestration system may be a virtual machine (VM). The orchestration system may be a container, such as LXC (Linux Container) running in a cloud, e.g. OpenStack. The orchestration system may transmit to the second service point 830, the necessary parameters for context creation. The orchestration system may transmit to the first service point 820, the necessary parameters for context creation. The orchestration system may transmit to the first service point 820 and the second service point 830, the information to secure the context transfer.

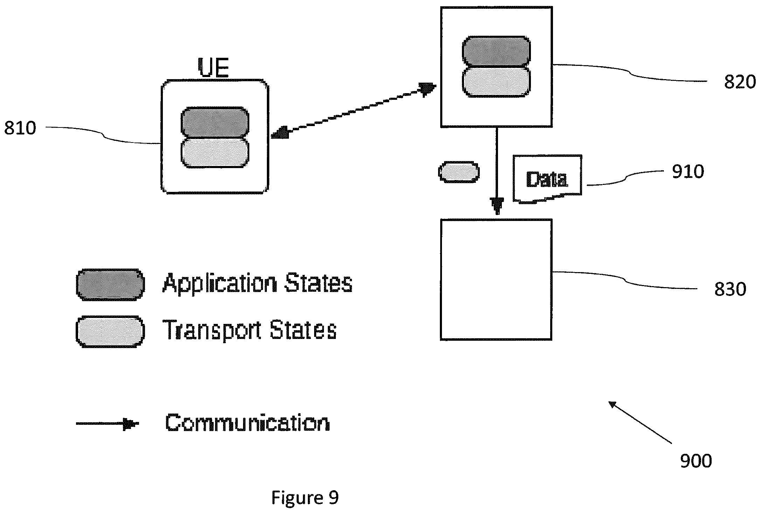

Reference is made to Figure 9, which illustrates the transfer of transport state during service migration in the communication system. Like elements of Figure 8 and Figure 9 are indicated with like reference numerals.

The first service point 820 may use the contact information to transfer data 910 for migration to the second service point 830. The contact information may be received from the logic 840 or from the orchestration system. In other examples, the first service point 820 may receive from the logic 840 or from the orchestration system, information (e.g., URL) indicating to the first service point 820 where to find the contact information.

The data 910 may include third party service libraries. The data 910 may include libraries used in the current service session with the device 810. The data 910 may include transport context/state related to the current service session with the device 810. In some examples, the transport state may be sent in a secure manner, i.e. the transport state may be encrypted. However, in other examples, in order to reduce the demands on software and hardware resources, and in order to speed up the transfer, the transport state may not be encrypted. The transport state may be non-encrypted in the case that full visibility/control of the network links/domain over which this transport state is exchanged is provided.

In some examples, the transfer of the data 910 between the first service point 820 and the second service point 830 may be initiated by the second service point 830. The second service point 830 may create and store new service context (which may be performed in response to an instruction from logic 840 or from the orchestration system), and then subsequently transmit an instruction to the first service point 820 to transfer the context data 910 to the second service point 830. The logic 840 or orchestrator may provide security credentials to the second service point 830 enabling the second service point 830 to contact the first service point 820.

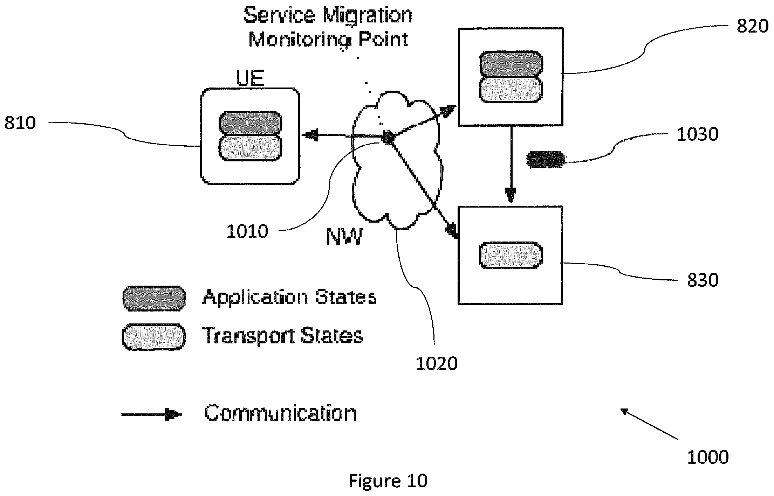

Reference is made to Figure 10, which illustrates the synchronisation of the service context between the first service point 820 and the second service point 830.

The SMMP 1010 receives an instruction to duplicate uplink packets received from the device that are indicated for transmission to the first service point 820. The SMMP transmits one uplink packet from each pair of duplicate uplink packets to the first service point 820 and the other uplink packet from each pair of duplicate uplink packets to the second service point 830.

The SMMP 1010 also receives an instruction to drop packets received on the downlink from the second service point 830 indicated for delivery to the device 810. In response to the instruction, the SMMP drops packets received on the downlink from the second service point 830 indicated for delivery to the device 810. In this case, the SMMP passes downlink data packets received from the first service point 820 to the device 810. In response to an instruction, the SMMP 1010 may apply a rule causing the duplicating of the uplink data packets. In response to an instruction, the SMMP 1010 may apply a rule causing the dropping of downlink data packets.

The instructions to duplicate uplink packets and to drop downlink packets may be received from the logic 840. The instructions may be received from the first service point 820. The instructions may be received from another element in the network. This other element in the network (which shall be referred to as the 'installation element') may receive an instruction to install the SMMP from the logic 840 or from the first service point 820 and, in response, select a location in the network 1020 at which the SMMP is to be installed so as to perform the duplication of uplink packets and/or the dropping of downlink packets as described above. The installation element may select a location in the network that is the closest common point to the second service point in a first user plane route from the device to the first service point and a second user plane route from the device to the second service point. The closest common point may be the closest common point in a first uplink route from the device to the first service point and a second uplink route from the device to the second service point. The closest common point to the second service point 830 may be understood to refer to the point - that is part of both routes - in the network having the shortest duration from which a data packet can be transmitted from said point to the second service point 830.

When the data 910 has been transferred to the second service point 820, then the device specific service context state synchronisation phase can begin. Synchronisation of the service context involves synchronising the transport state and application state between the two service points.

In the device specific transport state synchronisation phase, the device specific transport state is synchronised between the first service point 820 and the second service point 830. This involves the first service point 820 transferring device specific transport state to the second service point 830.

Prior to the transfer of the application state 1030, the new context at the second service point 830 does not contain the complete service context. Therefore, prior to receipt of the application state 1030 at the second service point 830, the second service point 830 may be configured to complete the application part of the messages (that are sent to the device 810 on the downlink via the SMMP) with padding (e.g. zeros). This may enable the second service point 830 to fill transmit window(s), which is required to achieve and maintain synchronisation of the transport state. This allows the transport state synchronisation to start before the application state 1030 is ready for transfer from the first service point 820.

The first service point 820 transfers application state 1030 to the second service point 830. In some examples, the transfer of the application state 1030 to the second service point 830 may take place after the synchronisation of the transport state. In some examples, the transfer of the application state 1030 may take place at the same time as the synchronisation of the transport state.

The second service point 830 updates the stored service context in dependence upon the received uplink data packets. The second service point 830 may update the application state in dependence upon the received uplink data packets. By updating the application state in dependence upon the received uplink data packets, the application state may be fully synchronised between the first service point 820 and the second service point 830 when the switch between the first service point 820 and the second service point 830 for the session occurs.

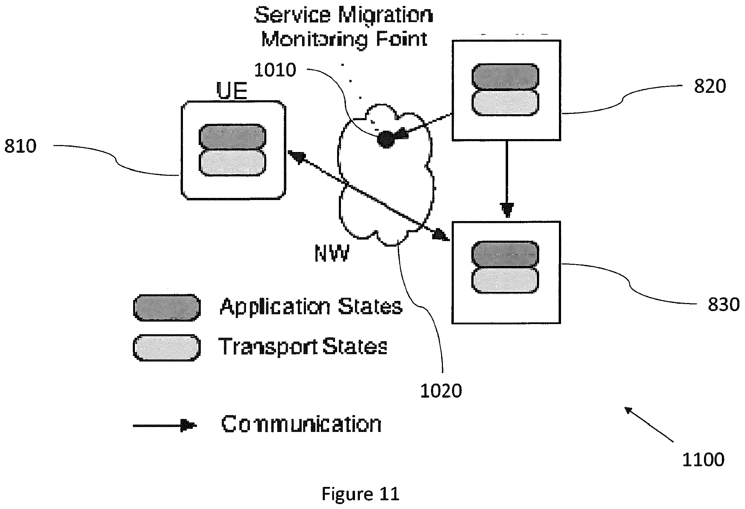

Reference is made to Figure 11, which shows how, when the service context (i.e. both transport and application states) has been synchronised, then the active path for the session is switched from the first service point 820 to the second service point 830. In this case, the downlink data packets sent from the second service point 830 to the device 810 are no longer dropped by the SMMP, but are received at the device. The SMMP may no longer duplicate the uplink data packets, but the uplink data packets may be received at the second service point 830 without being received at the first service point 820. The SMMP may revoke the rule that the uplink data packets are to be duplicated in response to an instruction. The instruction may be received from an apparatus/element of the network. The rule may no longer apply in response to the receipt of such an instruction.

The first service point 820 may continue to transmit downlink data packets to the device 810, with these downlink data packets being dropped by the network 1020. As shown in the Figure, the downlink data packets from the first service point 820 may be dropped by the SMMP 1010. The first service point 820 may continue to transmit the downlink data packets until it receives an instruction to stop. Once the first service point 820 stops transmitting the downlink data packets, the network 1020 or SMMP 1010 may revoke the rule that downlink data packets to the device 810 from the first service point 820 are to be dropped. The SMMP 1010 may revoke the rule in response to an instruction to do so. The instruction may be received from an apparatus/element of the network. The rule may no longer apply in response to the receipt of such an instruction.

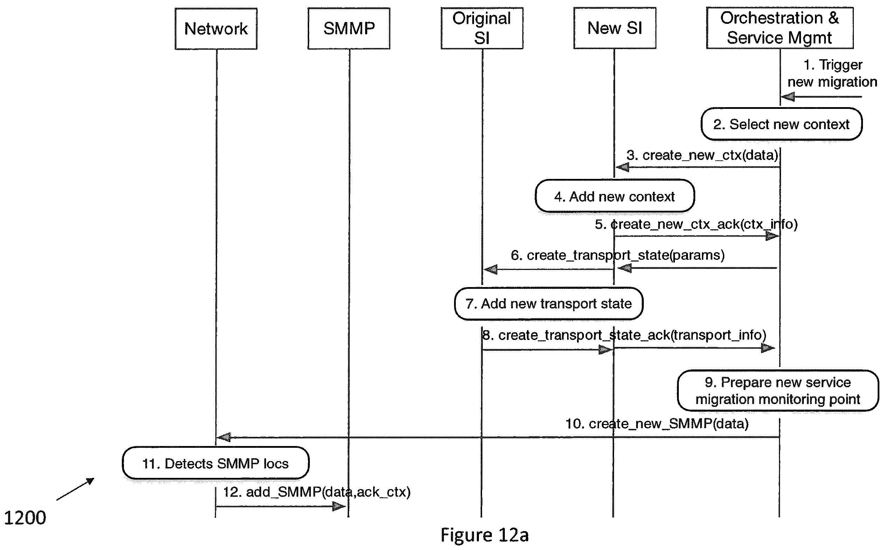

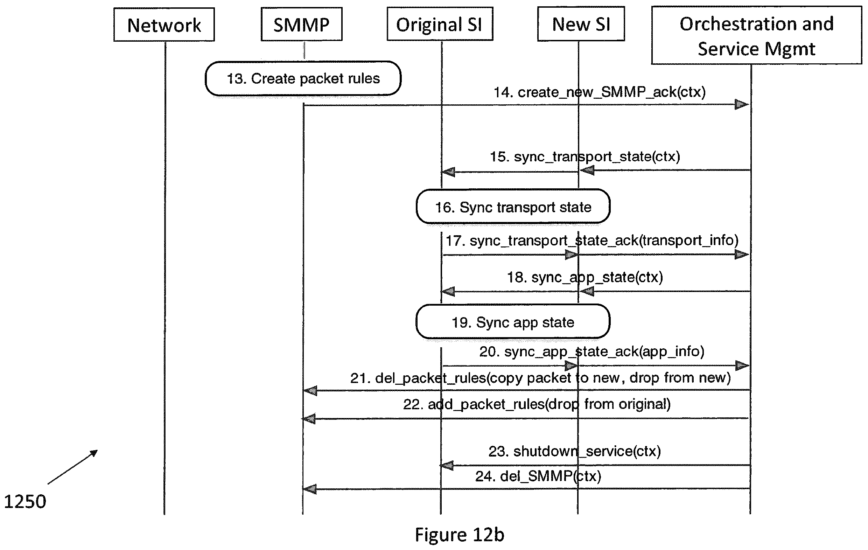

Reference is made to Figure 12a, which illustrates the first half 1200 of a message sequence diagram illustrating the process for migrating the service from the first service point to the second service point. The second half 1250 of the message sequence diagram is shown in Figure 12b.

The first service point is labelled here as "Original SI". The second service point is labelled here as "New SI". The element of the Figure shown as "Orchestration and Service Mgmt" could include any suitable logic for performing the actions shown. It would be appreciated by the skilled person that the SMMP is not limited by this name, but the SMMP may be any network apparatus that performs the functions described.

The element shown here as "Network" is the previously discussed "installation element".

At step 1, shown in the Figure, an event triggering the migration of service from the first service point to the second service point occurs. When step 1 occurs, the device is engaged in an active session with the first service point. The event may be the reception of a message at the Orchestration and Service Management, triggering the migration of service. This message may be received from the logic 840 illustrated in Figure 8.

In some examples, the event could be a maintenance event determined by the logic 840. The maintenance event could be a scheduled maintenance event resulting from, for example, the need to temporarily disable a data centre or one or more servers/racks of the data centre for maintenance purposes without disrupting on-going services.

In some examples, the event may result from a determination of change in the location of the device receiving the service to be migrated. For example, the event may result from a determination that the device is located at a predetermined distance from the first service point. Beyond such a distance, the network may be unable to maintain a predetermined Quality of Service (QoS) or Quality of Experience (QoE) for the service. Such a QoS may be a predetermined end-to-end latency.

At step 2, after it is determined that the service is to be migrated from the first service point, the second service point is selected for serving the device. The selection of the second service point may be performed based on the location of the device with respect to the second service point. The determination may be a determination that the device is located within a predetermined distance from the second service point. Within such a distance, the network may be able to maintain a predetermined Quality of Service (QoS) or Quality of Experience (QoE) for the service. Such a QoS may be a predetermined end-to-end latency. Therefore, to maintain a required QoS, the Orchestration and Service Management may determine that the service is to be migrated from the first service point to the second service point.

At step 3, the Orchestration and service management transmits a message to the second service point requesting the creation of a new context. This context will be synchronised with the service context held by the first service point and currently used for the active session with the device.

At step 4, the new context, requested in step 3, is created by the second service point.

At step 5, after the creation of the new context, the second service point is configured to send a message to the Orchestration and Service Management, reporting the details of the created new context.

In examples, the involvement of the Orchestration and Service Management may differ in dependence upon the particular resources that are required after the service is migrated. The Orchestration and Service Management may contain a separate Orchestration component and a separate Service Management component. In the case that the resources required by the migrated service include only service specified predefined computing and networking resources, then the Steps 3 and 5, may involve the Service Management component and not the Orchestration component. In the case that the resources required by the migrated service include new computing and networking resources that are not currently in use by the existing service prior to migration, then the Steps 3 and 5, may involve the Orchestration component in addition to the Service Management component.

At step 6, the Orchestration and Service management transmits message/s to the first service point and/or the second service point. These messages indicate that transport state held by the first service point for the session is to be copied to the second service point.

At step 7, the transfer of the transport state from the first service point to the second service point may be carried out. In some examples, the transfer may be pull communication, where the second service point transmits a pull request to receive the transport state, in response to which the first service point sends the transport state. In other examples, the transfer may be a push communication, where the first service point sends the transport state to the second service point without receiving a request to do so from second service point. In some examples, the transfer of the transport state may be performed using predefined configurations or preferences. In some examples, the first and second service points may negotiate with each other as to how the transfer of the transport state is to be carried out.

The transport state that is transferred at step 7 includes transport protocol state variables. It may include snapshot values of these transport protocol state variables at the time of the migration trigger. The snapshot values may include source addresses, destination addresses, port number/s, transport protocol state variables (which, in the case of TCP, may include: Syn received or Syn sent, established, fin wait, closing, time, wait, last ACK, etc.) with related protocol field values. Some of these parameters are static within a connection but many of them are dynamic.

At step 8, after the transfer of the transport state has been made, either or both of the first service point and the second service point transmit acknowledgement/s that the transfer of the transport state has been completed.

At step 9, the Orchestration and Service management prepares information from which the network may determine the locations in the network where monitoring and operations are to be performed for uplink and downlink data packets of the service session. This information may comprise information related to the first service point, the second service point, and the on-going service session. The information may be self-contained. The information may be determined from information received at the Orchestration and Service management from other elements of the communication system prior to step 9.

At step 10, the Orchestration and Service management sends an instruction to a network entity to setup the SMMP. The instruction may comprise some or all of the information determined at step 9.

At step 11, the network, in response to the message received at step 10, locates the closest common point to the second service point in the a first user plane route from the device to the first service point and a second user plane route from the device to the second service point. This point may be used for the SMMP functions of duplicating uplink packets and dropping downlink packets that have been described.

In some examples, at step 11, two points/network elements may be determined for the SMMP. A first network element may be selected at which the uplink packets are to be duplicated by the SMMP and sent to the first service point and the second service point. A second network element may be selected at which the downlink packets that are received from the second service point are dropped. In some examples, two separate points might be needed due to network traffic routing/forwarding asymmetry. The first network element may be selected to be at the closest common point to the second service point in the uplink routes from the device to the first service point and the second service point. The second network element may be selected to be at the closest common point to the second service point in the downlink routes from the first and the second service point to the device.

In some examples, the point/s for the SMMP may be located by a software defined networking (SDN) controller managing the routing/forwarding tables. In some examples, the point/s for the SMMP may be located by the network sending one or more probe packets towards the first and/or second service points.

At step 12, the network sends a request to setup the SMMP at the point/s that are determined in step 12. The request may be sent from one part of the network (which determines the location for the SMMP in step 11) to another part of the network (at which the point/s at which the data packets are duplicated).

Reference is made to Figure 12b, which shows the second half 1250 of the message sequence diagram.

At step 13, in response to the request made in step 12, the SMMP is configured to setup packet rules at the point/s identified in the request. The packet rules include the duplication of uplink packets and the transmission to the second service point of the duplicate packets. The packet rules may also include the deletion of downlink data packets transmitted by the second service point to the device.

At step 14, once established, the SMMP transmits a message to the Orchestration and Service Management acknowledging that the SMMP is setup with the packet rules. The network may provide at step 12, the necessary parameters to allow the SMMP to transmit this acknowledgment to the Orchestration and Service Management.

In some examples, steps 12 to 14 may be implemented in different ways. For example, instead of the illustrated step 12, the network may indicate the selected location/s of the point/s in a message sent to the Orchestration and Service Management. The Orchestration and Service Management may then request the installation of the SMMP at these location/s by sending a message to the SMMP.

At step 15, the Orchestration and Service Management sends message/s to the first service point and/or the second service point instructing the synchronisation of the transport state.

At step 16, the transport state is synchronised between the first service point and the second service point. The transport state was exchanged at step 7 as shown in Figure 12a. Although, some of this state is static (for example, TLS (Transport Level Security) related cryptographic information is likely to be static information), some of the variables of the state are dynamic. These dynamic state variables change in parallel with the migration event. Therefore, the final timewise accurate and up-to-date synchronization of the transport state between the first service point and the second service point is triggered at step 15 after all necessary preparative steps are done in the second service point. Then at step 16, the synchronization of the transport state is carried out.

At step 17, the first and/or second service point sends acknowledgment message/s to the Orchestration and Service Management to indicate that the transport state has been synchronised between the first service point and the second service point.

The steps 15-17 for the synchronisation of transport state may use the same signalling approach as is used for steps 6-8 in which the transport stream is created. Alternatively, the steps 15-17 may be carried out using a different signalling scheme to that used for step 6-8.

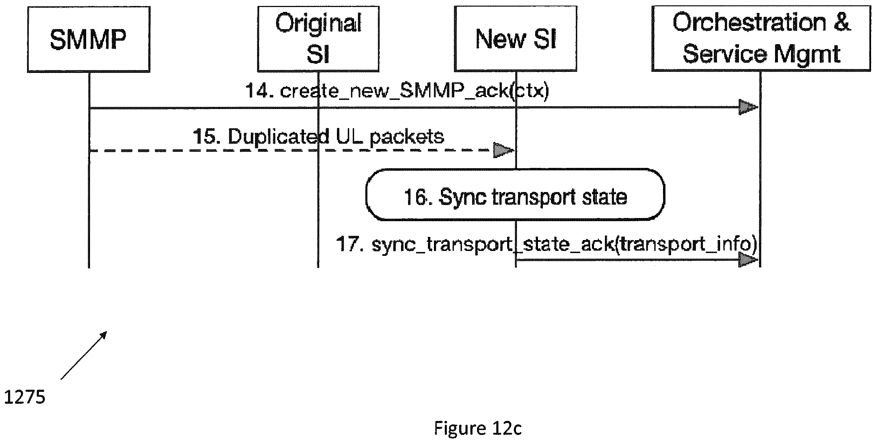

Reference is made to Figure 12c, which illustrates an alternative message sequence diagram 1275 for the steps 14 to 17, illustrated in Figure 12b. In this case, the synchronisation of the transport state that is carried out at step 16 occurs in response to receipt at the second service point of one or more of the duplicated uplink packets from the SMMP. In this case, the second service point may perform the synchronisation of the transport state autonomously (without the participation of the first service point). The synchronisation at step 16, in this case, may comprise detecting and adapting to the transport state changes. At step 17, the second service point sends an acknowledgment message to the Orchestration and Service Management to indicate that the transport state has been synchronised. In this case, since it is not involved in the synchronisation of the transport state, the first service point may send no acknowledgement message.

The steps 14 - 17 shown in Figure 12b, may be referred to as a tightly coupled scheme for transport state synchronisation. On the other hand, the steps 14-17 shown in Figure 12c, may be referred to as a loosely coupled scheme for transport state synchronisation. The choice of scheme has an impact on the platforms and services as well as on the back haul transport costs. The Orchestration and Service Management may select between the two schemes. The Orchestration and Service Management may transmit an indication of the selected scheme to the second service point. The Orchestration and Service Management may select the scheme in dependence upon which of the two schemes best match the service requirements. The signal as to which of the two schemes to use may be sent by the Orchestration and Service Management at step 6. In dependence upon the signal received, the first service point may determine whether to listen for uplink data packets received from the device without receiving an instruction to synchronise transport state (e.g. at step 15 at Figure 12b) or whether to listen for uplink data packets received from the device only after the synchronisation of the transport state at step 16.

Reference is made again to Figure 12b, which shows the steps that may occur after step 17 discussed above.

At step 18, the Orchestration and Service Management sends message/s to the first service point and/or the second service point instructing the synchronisation of the application state.

At step 19, the application state is synchronised between the first service point and the second service point.

At step 20, the first and/or second service point sends acknowledgment message/s to the Orchestration and Service Management to indicate that the application state has been synchronised between the first service point and the second service point.

During steps 18-20, the device continues to be served by the first service point, from which it receives downlink data packets. The duplicate uplink data packets are received at the second service point. The downlink data packets from the second service point are dropped at the SMMP. Downlink packets from the first service point may be passed to the device by the SMMP.

The steps 18-20 for the synchronisation of application state may use the same signalling approach as is used for steps 6-8 in which the transport stream is created. Alternatively, the steps 18-20 may be carried out using a different signalling scheme to that used for steps 6-8.

At steps 21 and 22, the SMMP receives message/s instructing a change to its rules. The message/s may instruct the SMMP to pass downlink data packets from the second service point to the device. The message/s may instruct the SMMP to drop downlink data packets from the first service point to the device. The SMMP may continue to duplicate the uplink data packets and transmit one copy to the first service point and another copy to the second service point. The message/s instructing this change of rules may be received from the Orchestration and Service Management.

The message/s received at steps 21 and 22 may comprise two separate messages. A first message may be received at step 21 to delete rules of the SMMP, e.g. the rule that downlink packets from the second service point are to be dropped. A second message may be received at step 22 to add rules to the SMMP, e.g. the rule that downlink packets from the first service point are to be dropped.

After the modifications made to steps 21 and 22, the second service point is then serving the device for the active session. In other words, the service has been migrated to the second service point.

Additionally, after steps 21 and 22, acknowledgments of the changes could be sent by the SMMP to the Orchestration and Service Management.

At step 23, the first service point receives a message instructing its shutdown.

At step 24, the SMMP receives a message instructing it to be disabled.

Additionally, after steps 23 and 24, acknowledgments of the changes could be sent by the SMMP to the Orchestration and Service Management.

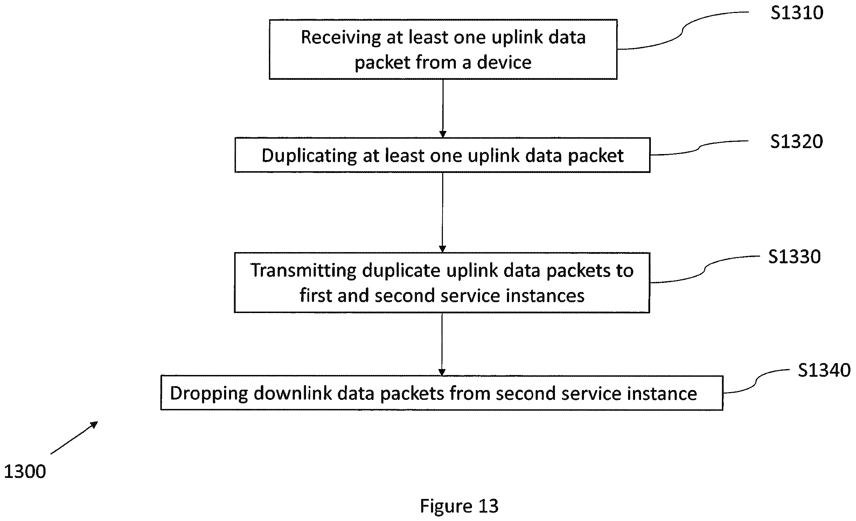

Reference is made to Figure 13, which shows a method 1300 according to examples of the application. This method may be implemented in the SMMP 1010 shown in Figures 10 and 11. It would be appreciated that this method 1300 is an example only, and that in other examples it is possible that one or more steps may be omitted. Furthermore, the order of the steps may differ from the order shown in the Figure, and one or more steps may occur simultaneously.

At S1310, the SMMP receives at least one uplink data packet from a device.

At S1320, the SMMP duplicates the at least one uplink data packet.

At S1330, the SMMP transmits during a migration of the service for the device between a first service point and a second service point the at least one uplink data packet that was duplicated to the first service point. The SMMP also transmits the at least one uplink data packet that was duplicated to the second service point.

At S1340, the SMMP drops downlink data packets from the second service point, i.e. the SMMP prevents these downlink data packets from being delivered to the device.

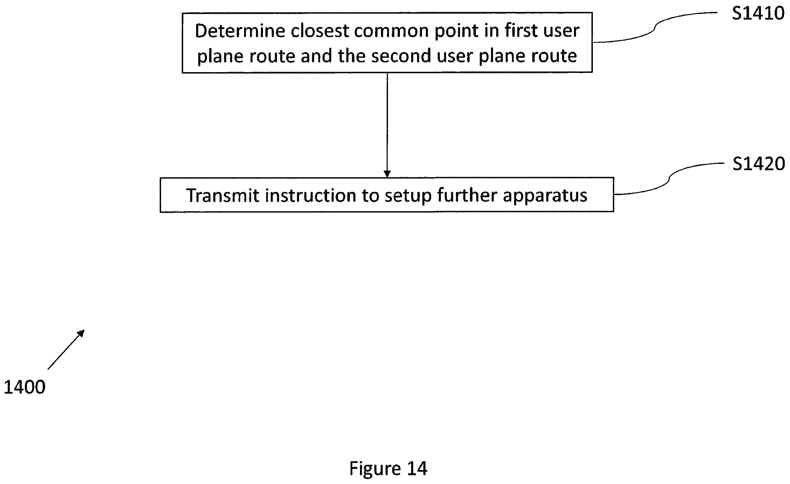

Reference is made to Figure 14, which shows an example of a method 1400 that may be performed according to examples of the application. The method 1400 may be performed in an element of the network 1020 shown in Figures 10 and 11. The network element in which the method 1400 may be performed may be that shown in Figures 12a and 12b.

At S1410, the network element determines a closest common point to the second service point in a first user plane route from the device to the first service point and a second user plane route from the device to the second service point.

At S1420, the network element 1400 is configured to transmit an instruction to the SMMP to perform the steps of method 1300.

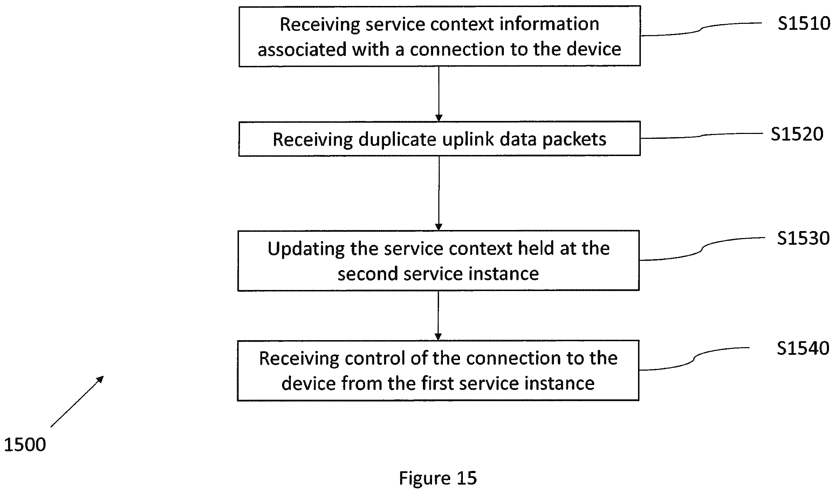

Reference is made to Figure 15, which shows an example of a method 1500 that may be performed according to examples of the application. The method 1500 may be performed in the second service point 830 shown in Figures 8 to 11.

At S1510, the method 1500 comprises receiving at the second service point from the first service point, service context associated with a connection to the device for synchronising the service context between the first service point and the second service point.

At S1520, the method 1500 comprises receiving during the synchronisation of the service context, at the second service point, a duplicate of at least one uplink data packet transmitted by the device to the first service point.

At S 1530, the method 1500 comprises updating the service context held at the second service point in dependence upon the received service context and the received duplicate of at least one uplink data packet.

At S 1540, the method 1500 comprises receiving control of the connection to the device from the first service point.

It should be understood that each block of the flowcharts of Figures 13 to 15 and any combination thereof may be implemented by various means or their combinations, such as hardware, software, firmware, one or more processors and/or circuitry. The methods may be implemented in a control apparatus as shown in Figure 3.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Control functions may comprise receiving at least one uplink data packet from a communication apparatus; duplicating said at least one uplink data packet; and causing the transmission during a migration of a service for said communication apparatus between a first service point to a second service point: said at least one uplink data packet to said first service point; and said at least one uplink data packet to said second service point.

Additionally or alternatively, control functions may comprise: duplicate at least one uplink data packet received from a communication apparatus; transmit during migration of service for said communication apparatus between a first service point to a second service point: said at least one uplink data packet to said first service point; and said at least one uplink data packet to said second service point.

Additionally or alternatively, control functions may comprise: receiving at a second service point provided by the apparatus from a first service point, service context associated with a connection to the communication apparatus for synchronising the service context between the first service point and the second service point; receiving during synchronisation of the service context, at the second service point, at least one uplink data packet transmitted by the communication apparatus to the first service point; updating the service context at the second service point in dependence upon the received duplicate of at least one uplink data packet; and providing service to the communication apparatus using the updated service context.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst aspects have been described in relation to Multi-access Edge Computing, similar principles can be applied in relation to other networks and communication systems. For example, the principles may be applies to devices operating using multi-connectivity. Therefore, although certain aspects were described above by way of example with reference to certain example architectures for wireless networks, technologies and standards, aspects may be applied to any other suitable forms of communication systems than those illustrated and described herein.

It is also noted herein that while the above describes example aspects, there are several variations and modifications which may be made to the disclosed solution without departing from the scope of the present disclosure.

In general, the various aspects may be implemented in hardware or special purpose circuits, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The aspects of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. The storage medium may be a non-transitory storage medium. A computer program product may comprise one or more computer-executable components which, when the program is run, are configured to carry out aspects. The one or more computer-executable components may be at least one software code or portions of it.

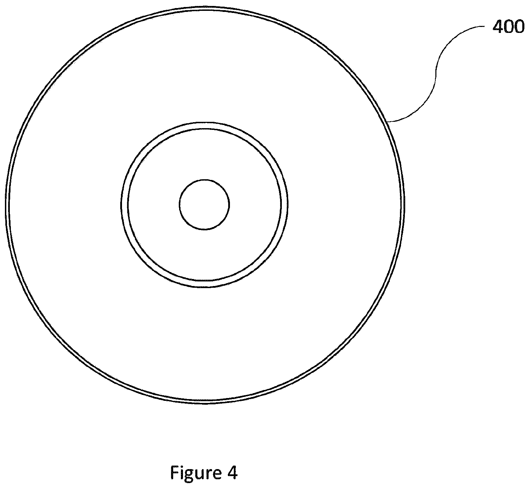

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. An example of a non-transitory computer readable medium 400 is shown in Figure 4. The non-transitory computer readable medium 400 may be a CD or DVD.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Aspects of the disclosures may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary aspect of this disclosure. However, various modifications and adaptations may become apparent to those skilled in the relevant arts in view of the foregoing description, when read in conjunction with the accompanying drawings and the appended claims.

However, all such and similar modifications of the teachings of this disclosure will still fall within the scope of this disclosure as defined in the appended claims. Indeed there is a further aspect comprising a combination of one or more aspects with any of the other aspects previously discussed.

## Claims

1. Network apparatus for orchestration and service management comprising:
means for transmitting an instruction to a first network apparatus for monitoring service migration, the instruction instructing the first network apparatus to:
duplicate (51320) at least one uplink data packet received from a communication apparatus;
transmit (51330) during migration of service for said communication apparatus between a first service point to a second service point:
said at least one uplink data packet to said first service point; and
said at least one uplink data packet to said second service point.

2. An apparatus as claimed in claim 1, wherein the apparatus further comprising means for:
determining a closest common point to the second service point in a first user plane route from the communication apparatus to the first service point and a second user plane route from the communication apparatus to the second service point; and
selecting the first network point in dependence upon the closest common point.

3. An apparatus as claimed in claim 1 or claim 2, wherein the apparatus further comprising means for transmitting an instruction to a second network apparatus to:
receive at least one downlink data packet from the first service point; and
receive at least one downlink data packet from the second service point;
forward the at least one downlink data packet received from the first service point to the communication apparatus; and
drop the at least one downlink data packet received from the second service point.

4. An apparatus as claimed in claim 3, wherein the first network apparatus and the second network apparatus are the same.

5. An apparatus as claimed in claim 3, wherein the apparatus further comprising means for transmitting an instruction to the second network apparatus to:
determining a closest common point to the second service point in a first downlink route from the first service point to the communication apparatus and a second downlink route from the second service point to the communication apparatus; and
selecting the second network apparatus in dependence upon the closest common point.

6. An apparatus as claimed in any of claims 1 to 5, wherein the first service point is provided by a first edge computing node and the second service point is provided by a second edge computing node.

7. A method comprising transmitting an instruction from apparatus for orchestration and service management to a first network apparatus for monitoring service migration, the instruction instructing the first network apparatus to:
duplicate (51320) at least one uplink data packet received from a communication apparatus;
transmit (51330) during migration of service for said communication apparatus between a first service point to a second service point:
said at least one uplink data packet to said first service point; and
said at least one uplink data packet to said second service point.

8. A method as claimed in claim 7, comprising:
determining a closest common point to the second service point in a first user plane route from the communication apparatus to the first service point and a second user plane route from the communication apparatus to the second service point; and
selecting the first network point in dependence upon the closest common point.

9. A method as claimed in claim 7 or claim 8, comprising transmitting an instruction to a second network apparatus to:
receive at least one downlink data packet from the first service point; and
receive at least one downlink data packet from the second service point;
forward the at least one downlink data packet received from the first service point to the communication apparatus; and
drop the at least one downlink data packet received from the second service point.

10. A non-transitory computer readable medium having encoded thereon statements and instructions to cause a processor to execute a method according to any one of claims 7 to 9.

## Patentansprüche

1. Netzwerkvorrichtung für eine Orchestrierung und eine Dienstverwaltung, die Folgendes umfasst:
Mittel zum Übertragen einer Anweisung zu einer ersten Netzwerkvorrichtung zum Überwachen einer Dienstmigration, wobei die Anweisung die erste Netzwerkvorrichtung zu Folgendem anweist:
Duplizieren (S1320) von mindestens einem Uplinkdatenpaket, das von einer Kommunikationsvorrichtung empfangen wird;
Übertragen (S1330) von Folgendem während einer Dienstmigration für die Kommunikationsvorrichtung von einem ersten Dienstpunkt zu einem zweiten Dienstpunkt:
des mindestens einen Uplinkdatenpakets zum ersten Dienstpunkt; und
des mindestens einen Uplinkdatenpakets zum zweiten Dienstpunkt.

2. Vorrichtung nach Anspruch 1, wobei die Vorrichtung ferner Mittel für Folgendes umfasst:
Bestimmen eines nächsten gemeinsamen Punktes zum zweiten Dienstpunkt in einer ersten Benutzerebenenroute von der Kommunikationsvorrichtung zum ersten Dienstpunkt und einer zweiten Benutzerebenenroute von der Kommunikationsvorrichtung zum zweiten Dienstpunkt; und
Auswählen des ersten Netzwerkpunktes in Abhängigkeit vom nächsten gemeinsamen Punkt.

3. Vorrichtung nach Anspruch 1 oder Anspruch 2, wobei die Vorrichtung ferner Mittel zum Übertragen einer Anweisung zu einer zweiten Netzwerkvorrichtung für Folgendes umfasst:
Empfangen von mindestens einem Downlinkdatenpaket vom ersten Dienstpunkt; und
Empfangen von mindestens einem Downlinkdatenpaket vom zweiten Dienstpunkt;
Weiterleiten des mindestens einen Downlinkdatenpakets, das vom ersten Dienstpunkt empfangen wurde, zur Kommunikationsvorrichtung; und
Trennen des mindestens einen Downlinkdatenpakets, das vom zweiten Dienstpunkt empfangen wurde.

4. Vorrichtung nach Anspruch 3, wobei die erste Netzwerkvorrichtung und die zweite Netzwerkvorrichtung dieselbe sind.

5. Vorrichtung nach Anspruch 3, wobei die Vorrichtung ferner Mittel zum Übertragen einer Anweisung zur zweiten Netzwerkvorrichtung für Folgendes umfasst:
Bestimmen eines nächsten gemeinsamen Punktes zum zweiten Dienstpunkt in einer ersten Downlinkroute vom ersten Dienstpunkt zur Kommunikationsvorrichtung und einer zweiten Downlinkroute vom zweiten Dienstpunkt zur Kommunikationsvorrichtung; und
Auswählen der zweiten Netzwerkvorrichtung in Abhängigkeit vom nächsten gemeinsamen Punkt.

6. Vorrichtung nach einem der Ansprüche 1 bis 5, wobei der erste Dienstpunkt von einem ersten Edgedatenverarbeitungsknoten bereitgestellt wird und der zweite Dienstpunkt von einem zweiten Edgedatenverarbeitungsknoten bereitgestellt wird.

7. Verfahren, das das Übertragen einer Anweisung von einer Vorrichtung für eine Orchestrierung und eine Dienstverwaltung zu einer ersten Netzwerkvorrichtung zum Überwachen einer Dienstmigration umfasst, wobei die Anweisung die erste Netzwerkvorrichtung zu Folgendem anweist:
Duplizieren (S1320) von mindestens einem Uplinkdatenpaket, das von einer Kommunikationsvorrichtung empfangen wird;
Übertragen (S1330) von Folgendem während einer Dienstmigration für die Kommunikationsvorrichtung von einem ersten Dienstpunkt zu einem zweiten Dienstpunkt:
des mindestens einen Uplinkdatenpakets zum ersten Dienstpunkt; und
des mindestens einen Uplinkdatenpakets zum zweiten Dienstpunkt.

8. Verfahren nach Anspruch 7, das Folgendes umfasst:
Bestimmen eines nächsten gemeinsamen Punktes zum zweiten Dienstpunkt in einer ersten Benutzerebenenroute von der Kommunikationsvorrichtung zum ersten Dienstpunkt und einer zweiten Benutzerebenenroute von der Kommunikationsvorrichtung zum zweiten Dienstpunkt; und
Auswählen des ersten Netzwerkpunktes in Abhängigkeit vom nächsten gemeinsamen Punkt.

9. Verfahren nach Anspruch 7 oder Anspruch 8, das das Übertragen einer Anweisung zu einer zweiten Netzwerkvorrichtung für Folgendes umfasst:
Empfangen von mindestens einem Downlinkdatenpaket vom ersten Dienstpunkt; und
Empfangen von mindestens einem Downlinkdatenpaket vom zweiten Dienstpunkt;
Weiterleiten des mindestens einen Downlinkdatenpakets, das vom ersten Dienstpunkt empfangen wurde, zur Kommunikationsvorrichtung; und
Trennen des mindestens einen Downlinkdatenpakets, das vom zweiten Dienstpunkt empfangen wurde.

10. Nichttransitorisches computerlesbares Medium, auf dem Aussagen und Anweisungen codiert sind, um einen Prozessor zu veranlassen, das Verfahren gemäß einem der Ansprüche 7 bis 9 auszuführen.

## Revendications

1. Appareil de réseau pour l'orchestration et la gestion des services comprenant :
des moyens pour transmettre une instruction à un premier appareil de réseau pour surveiller une migration de service, l'instruction ordonnant au premier appareil de réseau de :
dupliquer (S1320) au moins un paquet de données de liaison montante reçu d'un appareil de communication ;
pendant la migration du service pour ledit appareil de communication entre un premier point de service et un deuxième point de service, transmettre (S1330) :
ledit au moins un paquet de données de liaison montante audit premier point de service ; et
ledit au moins un paquet de données de liaison montante audit deuxième point de service.

2. Appareil selon la revendication 1, dans lequel l'appareil comprend en outre des moyens pour :
déterminer le point commun le plus proche du deuxième point de service dans un premier itinéraire de plan utilisateur allant de l'appareil de communication au premier point de service et dans un deuxième itinéraire de plan utilisateur allant de l'appareil de communication au deuxième point de service ; et
sélectionner le premier point de réseau en fonction du point commun le plus proche.

3. Appareil selon la revendication 1 ou la revendication 2, dans lequel l'appareil comprend en outre des moyens pour transmettre une instruction à un deuxième appareil de réseau pour :
recevoir au moins un paquet de données de liaison descendante en provenance du premier point de service ; et
recevoir au moins un paquet de données de liaison descendante en provenance du deuxième point de service ;
transférer l'au moins un paquet de données de liaison descendante reçu du premier point de service à l'appareil de communication ; et
abandonner l'au moins un paquet de données de liaison descendante reçu du deuxième point de service.

4. Appareil selon la revendication 3, dans lequel le premier appareil de réseau et le deuxième appareil de réseau sont identiques.

5. Appareil selon la revendication 3, dans lequel l'appareil comprend en outre des moyens pour transmettre une instruction au deuxième appareil de réseau pour :
déterminer le point commun le plus proche du deuxième point de service dans un premier itinéraire de liaison descendante allant du premier point de service à l'appareil de communication et dans un deuxième itinéraire de liaison descendante allant du deuxième point de service à l'appareil de communication ; et
sélectionner le deuxième appareil de réseau en fonction du point commun le plus proche.

6. Appareil selon l'une des revendications 1 à 5, dans lequel le premier point de service est fourni par un premier nœud informatique périphérique et le deuxième point de service est fourni par un deuxième nœud informatique périphérique.

7. Procédé comprenant la transmission d'une instruction en provenance d'un appareil pour l'orchestration et la gestion des services à un premier appareil de réseau pour surveiller une migration de service, l'instruction ordonnant au premier appareil de réseau de :
dupliquer (S1320) au moins un paquet de données de liaison montante reçu d'un appareil de communication ;
pendant la migration du service pour ledit appareil de communication entre un premier point de service et un deuxième point de service, transmettre (S1330) :
ledit au moins un paquet de données de liaison montante audit premier point de service ; et ledit au moins un paquet de données de liaison montante audit deuxième point de service.

8. Procédé selon la revendication 7, comprenant les étapes suivantes :
déterminer le point commun le plus proche du deuxième point de service dans un premier itinéraire de plan utilisateur allant de l'appareil de communication au premier point de service et dans un deuxième itinéraire de plan utilisateur allant de l'appareil de communication au deuxième point de service ; et
sélectionner le premier point de réseau en fonction du point commun le plus proche.

9. Procédé selon la revendication 7 ou la revendication 8, comprenant la transmission d'une instruction à un deuxième appareil de réseau pour :
recevoir au moins un paquet de données de liaison descendante en provenance du premier point de service ; et
recevoir au moins un paquet de données de liaison descendante en provenance du deuxième point de service ;
transférer l'au moins un paquet de données de liaison descendante reçu du premier point de service à l'appareil de communication ; et
abandonner l'au moins un paquet de données de liaison descendante reçu du deuxième point de service.

10. Support non transitoire lisible par ordinateur sur lequel sont codées des énoncés et des instructions pour amener un processeur à exécuter un procédé selon l'une des revendications 7 à 9.
